# EUROPÄISCHE PATENTSCHRIFT

(11) **EP 0 683 876 B1**
(45) Veröffentlichungstag und Bekanntmachung des Hinweises auf die Patenterteilung: **23.04.1997**
(21) Anmeldenummer: 94908305.9
(22) Anmeldetag: 15.02.1994
(51) Int. Cl.: F16H 55/56, F16H 9/18, F16C 31/04

(54) **EINRICHTUNG ZUR FÜHRUNG EINER BEWEGLICHEN SCHEIBE**
MOVABLE DISK GUIDING ARRANGEMENT
SYSTEME DE GUIDAGE D'UN DISQUE MOBILE

(30) Priorität: 19.02.1993 DE 4305102
(43) Veröffentlichungstag der Anmeldung: 29.11.1995
(73) Patentinhaber: ZF FRIEDRICHSHAFEN Aktiengesellschaft, 88038 Friedrichshafen (DE)
(72) Erfinder: MOZER, Herbert, D-88048 Friedrichshafen (DE)
(86) Internationale Anmeldenummer: EP9400424
(87) Internationale Veröffentlichungsnummer: WO9419627

(56) Entgegenhaltungen:
- DE-A- 4 025 011
- DE-C- 3 816 357

## Beschreibung

Die Erfindung betrifft eine Einrichtung zur Führung einer beweglichen Scheibe in einem stufenlos regelbaren Umschlingungsgetriebe nach dem Oberbegriff des ersten Anspruchs.

Stufenlose Umschlingungsgetriebe haben auf der An- und Abtriebswelle jeweils ein Kegelscheibenpaar. Zwischen diesem Kegelscheibenpaar läuft ein Riemen, Kette oder Gliederband, welches die An- und Abtriebswelle umschlingt. Jedes Kegelscheibenpaar besteht aus einer mit einer Welle fest verbundenen ersten Kegelscheibe und einer zweiten, in axialer Richtung verschiebbaren, Kegelscheibe. Über eine hydraulische Betätigungseinrichtung wird die axiale Lage der zweiten Scheibe verändert. Dadurch wird der wirksame Durchmesser des Umschlingungsmittels und somit die Getriebeübersetzung verändert.

Aus der DE 38 16 357 ist ein gattungsgemäßes stufenlos regelbares Kegelscheiben-Umschlingungsgetriebe bekannt. Eine darin dargestellte bewegliche Scheibe ist auf losen Kugeln gelagert. Geführt werden diese Kugeln in Kugelbahnen, die in axialer Richtung auf der Welle und dem Schaft der beweglichen Scheibe angebracht sind. Die Welle und der Schaft weisen mehrere solcher Kugelbahnen auf. Zwei Sicherungselemente bilden den linken und rechten Anschlag für die Kugeln. Dazwischen sind die Kugeln in axialer Richtung frei beweglich. Die Si-cherungselemente und die Kugeln müssen einzeln durch eine Vorrichtung oder von Hand eingefädelt werden.

Die Erfindung hat die Aufgabe, eine montagefreundliche Lösung, zugleich belastbare Verbindung Welle/Scheibe bei kompakter Bauweise, anzustreben.

Die Aufgabe wird erfindungsgemäß gelöst, indem die der jeweiligen Kugelbahn zugeordneten Kugeln in einem Halteelement eingebettet sind. Die Halteelemente sind so gestaltet, daß die Führungsfunktion des Zentrierdurchmessers zwischen Scheibe und Welle nicht beeinträchtigt wird. Die Halteelemente sind höchstens in einem schmalen Bereich mittels eines Verbindungselementes verbunden. Dadurch erzielt man den Vorteil, daß alle Kugeln in nur einem Arbeitsgang eingebracht werden. Die erfindungsgemäße Lösung ist selbstverständlich auch auf andere Wälzkörper anwendbar.
Üblicherweise sind derartige Halteelemente und Verbindungselemente aus Blech oder Kunststoff. Durch eine farbliche Markierung des Halteelementes werden Kugeln gleicher Toleranz identifiziert.

In Ausgestaltung der Erfindung wird vorgeschlagen, daß die Verbindung der Halteelemente untereinander ein Sicherungsring ist. Zur besseren Montage ist der Sicherungsring geschlitzt.
Der axiale Weg des Sicherungsrings wird festgelegt, indem der Sicherungsring in einer Wellennut sitzt oder indem der Sicherungsring an zwei Flächen zur Anlage kommt. Die Anlageflächen können z. B. durch eine Eindrehung der Welle entstehen. Da Sicherungsring, Halteelement und Kugeln eine Einheit bilden, ist somit auch der axiale Weg der Kugeln bestimmt. Gegenüber dem Stand der Technik entfällt dadurch das zweite Sicherungselement.
Die Verbindung Halteelement/Verbindungselement kann lösbar sein, z. B. durch Einklippen, als auch unlösbar sein, indem z. B. Halteelement und Verbindungselement aus einem Kunststoffteil sind.

In einer weiteren Ausgestaltung der Erfindung wird vorgeschlagen, daß der Sicherungsring mehrere Schulterstücke aufweist. Die Schulterstücke sitzen am äußeren Umfang des Sicherungsrings. Der axiale Weg des Sicherungsrings wird jetzt durch eine Fläche in der Nabe der beweglichen zweiten Scheibe und durch eine Fläche an der Welle bestimmt, an denen die Schulterstücke zur Anlage kommen. Hiermit erzielt man den Vorteil, daß der Wellendurchmesser für den Sicherungsring größer belassen werden kann. Das Widerstandsmoment der Welle vergrößert sich dadurch. Eine geringere axiale Verschiebbarkeit der Anordnung Halteelement und Sicherungsring bedeutet kürzere Kugelbahnen. Daraus ergibt sich der Vorteil, daß die Nabe der beweglichen Scheibe kürzer ausgeführt werden kann. Insgesamt ergibt sich dadurch eine geringere Baulänge für ein Kegelscheibenpaar.

In der Zeichnung ist ein Ausführungsbeispiel dargestellt.
Es zeigen:
- Fig. 1: einen Längsschnitt, Welle mit Kegelscheibenpaar;
- Fig. 2: eine Ausführungsform Sicherungsring mit Halteelement;
- Fig. 3: ein Schnittbild, Linie III-III;
- Fig. 4: einen Längsschnitt, Welle mit Kegelscheibenpaar;
- Fig. 5: einen Längsschnitt, Welle mit Kegelscheibenpaar und
- Fig. 6: eine Ausführungsform Sicherungsring mit Halteelement.

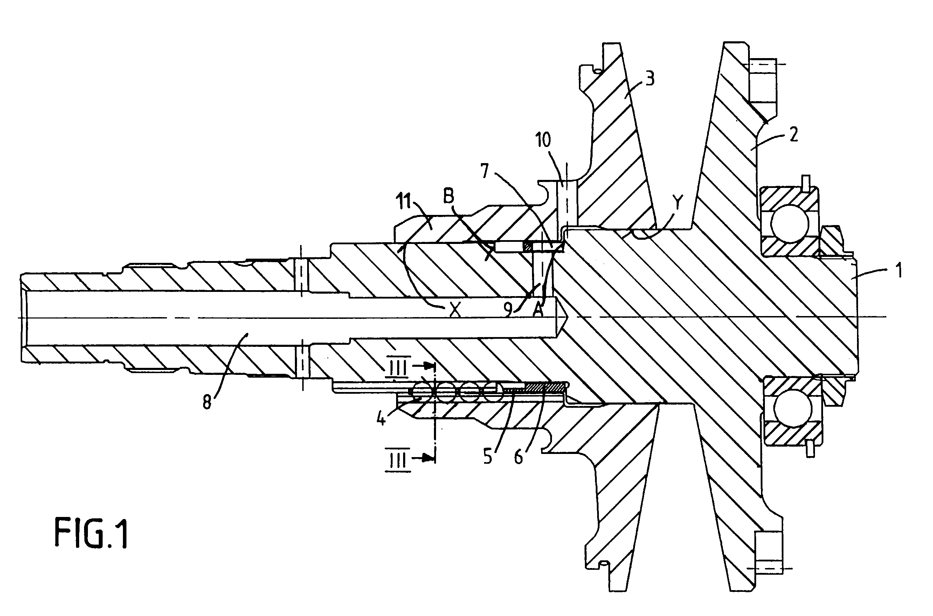

Fig. 1 zeigt im Längsschnitt eine Welle 1 mit einem Kegelscheibenpaar. Das Kegelscheibenpaar besteht aus einer mit der Welle 1 feststehenden Kegelscheibe 2 und einer auf der Welle 1 in axialer Richtung verschiebbaren Kegelscheibe 3. Zwischen den beiden Kegelscheiben läuft ein nicht dargestelltes Umschlingungsmittel, z. B. ein Riemen. Durch das Verschieben der beweglichen Scheibe 3 in axialer Richtung wird der wirksame Durchmesser des Umschlingungsmittels verändert. Die Scheibe 3 ist auf Kugeln 4 gelagert. Die Kugeln 4 erfüllen zweierlei Funktionen:
1. die Verschiebbarkeit der Scheibe 3 in axialer Richtung und
2. die Momentübertragung der drehenden Scheibe 3 auf die Welle 1 bei der Abtriebswelle und von der drehenden Welle 1 auf die Scheibe 3 bei der Antriebswelle.

Die Zentrierung der Scheibe 3 auf der Welle 1 erfolgt durch die Zentrierdurchmesser X und Y. Die Höhe des maximal übertragbaren Moments wird in bekannter Weise durch die Anzahl der Kugeln 4 festgelegt. Die Kugeln 4 sind in einem Halteelement 5 eingebettet. Auf dem Umfang der Welle 1 sind mehrere Kugelbahnen mit Halteelementen 5 verteilt, in Fig. 1 ist nur dasjenige Halteelement 5 dargestellt, welches in der Schnittebene liegt. Das Halteelement 5 besteht aus einem waagerechten und einem senkrechten Steg. Das Halteelement 5 ist mit einem Verbindungselement verbunden. Dargestellt ist ein geschlitzer Sicherungsring 6. Die Verbindung Halteelement 5 mit dem Verbindungselement kann lösbar sein, z. B. durch Einklippen, oder unlösbar sein, indem z. B. das Halteelement 5 und das Verbindungselement aus einem Kunststoffteil gegossen sind.

In Fig. 1 dargestellt ist eine unlösbare Verbindung. Der axiale Weg der festen Anordnung Kugeln 4, Halteelement 5 und Sicherungsring 6 wird durch Anlageflächen A und B bestimmt. Dadurch entfällt das zweite Sicherungselement. Die beiden Anlageflächen A und B entstehen aus einer Eindrehung in der Welle 1. Der axiale Abstand der beiden Flächen A und B wird durch den maximalen Hub der beweglichen Scheibe 3 bestimmt. Der Sicherungsring 6 weist mehrere Durchlässe 7 auf. Über den Weg Kanal 8, Bohrung 9, Durchlaß 7 und Bohrung 10 wird ein Druckmedium einem nicht dargestellten Druckraum zugeführt. Über das Druckniveau in diesen Druckraum wird die Position der beweglichen Scheibe 3 bestimmt.

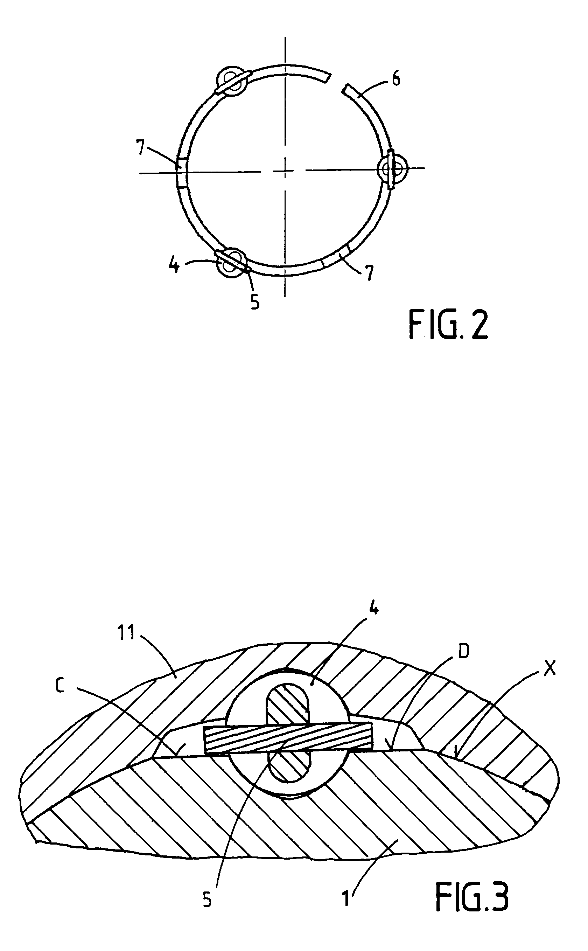

Fig. 2 zeigt einen geschlitzten Sicherungsring 6 aus Fig. 1 in Draufsicht. An dem Sicherungsring 6 sind mehrere Halteelemente 5 angebracht, in denen Kugeln 4 eingebettet sind. Dargestellt sind drei Halteelemente 5. Die Halteelemente 5 bestehen aus einem waagerechten und einem senkrechten Steg. Der Sicherungsring 6 weist mehrere Durchlässe 7 für ein Druckmedium auf. Dargestellt sind zwei Durchlässe 7.

Fig. 3 zeigt ein Schnittbild entlang der Linie III-III aus Fig. 1. Dargestellt sind die Welle 1 und die Nabe 11 der beweglichen Scheibe 3. In die Welle 1 und Nabe 11 sind Kugelbahnen eingebracht, in denen Kugeln 4 laufen, die durch das Halteelement 5 gehalten werden. Das Halteelement 5 besteht aus einem waagerechten und einem senkrechten Steg.
Eine Übertragung des Drehmoments von der Welle 1 auf die bewegliche Scheibe 3 geschieht formschlüssig über die Kugeln 4. Die Anzahl der Kugeln 4 bestimmt die Höhe des übertragbaren Moments.

Die Welle 1 ist im Bereich der Kugelbahnen abgeflacht, Flächen C und D. Durch die Abflachung und eine entsprechende Gestaltung des Flansches 11 im Bereich der Kugelbahnen entsteht ein Zwischenraum für die Halteelemente 5. Die Führungsfunktion des Zentrierdurchmessers X wird hierdurch nicht beeinträchtigt.

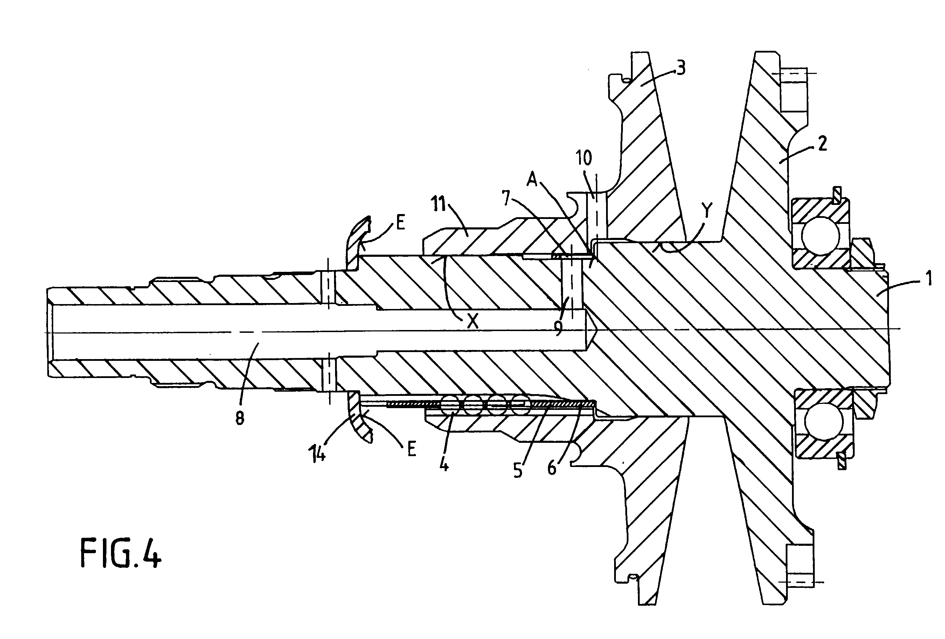

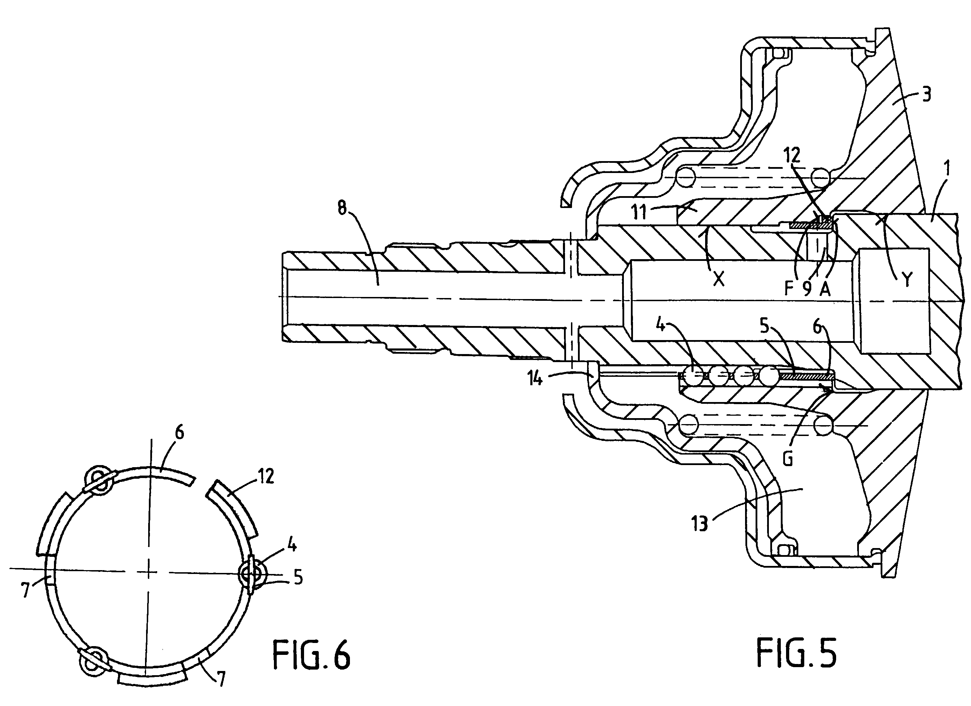

Fig. 4 zeigt dasselbe Kegelscheibenpaar wie Fig. 1 mit einer anderen Ausgestaltung des Halteelementes 5 und Verbindungselementes, dem Sicherungsring 6.
Der axiale Weg der Anordnung Kugeln 4, Halteelement 5 und Sicherungrings 6 wird durch eine Anlagefläche A und eine Anlagefläche E bestimmt. Die Anlagefläche E kann z. B. eine feststehende Wand eines Topfes 14 sein, wie in Fig. 5 dargestellt.

Fig. 5 zeigt ebenfalls dasselbe Kegelscheibenpaar aus Fig. 1 mit einer weiteren Ausgestaltung des Sicherungsrings 6. Der Sicherungsring 6 weist zusätzlich mehrere Schulterstücke 12 auf. Der axiale Weg des Sicherungsrings 6 und der Halteelemente 5 wird durch die beiden Flächen A und F bestimmt, an denen die Schulterstücke 12 zur Anlage kommen. Die Fläche F entsteht durch radiale Ausnehmungen der Nabe 11. Die radialen Ausnehmungen sind segmentweise am Umfang verteilt, so daß die Restfläche G die Funktion der axialen Wegbegrenzung der Scheibe 3 an der Fläche A beibehält.
Gegenüber Fig. 1 weist die Welle 1 im Bereich der Eindrehung einen größeren Durchmesser auf, dadurch verbessert sich die Belastbarkeit der Welle 1.
Über den Weg Kanal 8, Bohrung 9, Durchlaß 7 und Bohrung 10 wird ein Druckmedium einem Druckraum 13 zugeführt. Die bewegliche Scheibe 3 und ein Topf 14 bilden diesen Druckraum 13. In Fig. 5 liegen der Durchlaß 7 und die Bohrung 10 außerhalb der Zeichenebene.

Fig. 6 zeigt den geschlitzten Sicherungsring 6 aus Fig. 5 in Draufsicht. An den Sicherungsring 6 sind mehrere Halteelemente 5 angebracht, in denen Kugeln 4 eingebettet sind. Dargestellt sind drei Halteelemente. Die Halteelemente 5 bestehen aus einem waagerechten und einem senkrechten Steg. Der Sicherungsring 6 weist mehrere Durchlässe 7 für ein Druckmedium auf. Dargestellt sind zwei Durchlässe 7. Zusätzlich weist der Sicherungsring 6 mehrere Schulterstücke 12 auf, welche in gleichen Abständen am Umfang angeordnet sind. Dargestellt sind drei Schulterstücke 12. Aufgabe der Schulterstücke 12 ist es, zusammen mit den Anlageflächen A und F den axialen Weg der Anordnung Halteelement 5 und Sicherungsring 6 festzulegen.

## Patentansprüche

1. Einrichtung zur Führung einer beweglichen Scheibe (3) in einem stufenlos regelbaren Umschlingungsgetriebe mit je einem Kegelscheibenpaar auf der An- und Abtriebswelle, jedes Kegelscheibenpaar besteht aus einer in axialer Richtung feststehenden ersten Kegelscheibe (2) und einer zweiten Kegelscheibe (3), welche auf in mehreren Kugelbahnen geführten freien Kugeln in axialer Richtung beweglich ist, dadurch **gekennzeichnet**, daß die der jeweiligen Kugelbahn zugeordneten Kugeln (4) in einem Halteelement (5) eingebettet sind, wobei die Halteelemente so gestaltet sind, daß die Führungsfunktion des Zentrierdurchmessers (X) zwischen Scheibe (3) und Welle (1) nicht beeinträchtigt wird und wobei die Halteelemente (5) höchstens in einem schmalen Bereich mittels eines Verbindungselementes untereinander verbunden sind.

2. Einrichtung nach Anspruch 1, dadurch **gekennzeichnet,** daß das Verbindungselement ein Sicherungsring (6) ist.

3. Einrichtung nach Anspruch 2, dadurch **gekennzeichnet,** daß der Sicherungsring (6) geschlitzt ist.

4. Einrichtung nach Anspruch 1, 2 oder 3, dadurch **gekennzeichnet,** daß die Halteelemente (5) lösbar oder unlösbar mit dem Verbindungselement fixiert sind.

5. Einrichtung nach Anspruch 2, dadurch **gekennzeichnet**, daß eine axiale Verschiebbarkeit des Sicherungsrings (6) bestimmt ist durch eine Nut oder zwei Anlageflächen der Bauteile.

6. Einrichtung nach Anspruch 2, dadurch **gekennzeichnet,** daß der Sicherungsring (6) Schulterstücke (12) aufweist, die in radialen Ausnehmungen der Scheibe (3) zur Anlage kommen, ohne dabei die Funktion der axialen Wegbegrenzung der Fläche (G) der Scheibe (3) an der Fläche (A) der Welle (1) zu stören.

7. Einrichtung nach Anspruch 2, dadurch **gekennzeichnet,** daß der Sicherungsring (6) Durchlässe (7) für ein Druckmedium aufweist.

8. Einrichtung nach Anspruch 1, dadurch **gekennzeichnet,** daß die An- und Abtriebswelle im Bereich der Kugelbahnen abgeflacht sind und die beweglichen Scheiben im Bereich der Kugelbahnen eine spezielle Kontur aufweisen.

## Claims

1. Device for guiding a movable disc (3) in an infinitely variable belt transmission with a respective bevel disc pair on the input and output shafts, each bevel disc pair consisting of a first bevel disc (2) fixed in the axial direction and a second bevel disc (3), which is movable in the axial direction on free balls guided in a plurality of ball paths, characterised in that the balls (4) allocated to the respective ball path are embedded in a mounting (5), the mountings being so formed that the guide function of the centring diameter (X) between the disc (3) and shaft (1) is not impaired and wherein the mountings (5) are connected together at most in a narrow region by means of a connecting element.

2. Device according to claim 1, characterised in that the connecting element is a retaining ring (6).

3. Device according to claim 2, characterised in that the retaining ring (6) is slotted.

4. Device according to claim 1, 2 or 3, characterised in that the mountings (5) are detachably or non-detachably fixed to the connecting element.

5. Device according to claim 2, characterised in that a degree of axial mobility of the retaining ring (6) is determined by a groove or two contact faces of the components.

6. Device according to claim 2, characterised in that the retaining ring (6) has shoulder members (12), which come to rest in radial cut-outs of the disc (3) without impairing the function of the axial path limitation of the face (G) of the disc (3) on the face (A) of the shaft (1).

7. Device according to claim 2, characterised in that the retaining ring (6) has gaps (7) for a pressure medium.

8. Device according to claim 1, characterised in that the input and output shafts are flattened in the region of the ball paths and the movable discs have, in the region of the ball paths, a special contour.

## Revendications

1. Dispositif pour le guidage d'un disque mobile (3) dans une transmission variable en continu, comportant une paire de disques coniques respectivement montés sur l'arbre d'entraînement et sur l'arbre entraîné, chaque paire de disques coniques étant constituée d'un premier disque conique (2) et d'un second disque conique (3) fixes selon une direction axiale, qui sont mobiles axialement sur des billes librement mobiles sur plusieurs chemins de roulement, **caractérisé en ce que** les billes (4) respectivement associées aux chemins de roulement, sont incorporées dans un élément de maintien (5), ces éléments de maintien étant agencés de telle manière que la fonction de guidage du diamètre de centrage (X) entre le disque (3) et l'arbre (1) n'est pas influencé et dans lequel les éléments de maintien (5) sont liés entre eux au plus dans une faible zone centrale au moyen d'un élément de liaison.

2. Dispositif selon la revendication 1, **caractérisé en ce que** l'élément de liaison est une bague de fixation (6).

3. Dispositif selon la revendication 2, **caractérisé en ce que** la bague de fixation (6) est fendue.

4. Dispositif selon les revendications 1, 2, ou 3, **caractérisé en ce que** les éléments de maintien (5) sont liés de façon amovible ou rigide à l'élément de liaison.

5. Dispositif selon la revendication 2, **caractérisé en ce qu'**un décalage axial de la ligne de fixation (6) est déterminé par une rainure ou deux surfaces d'appui d'un composant.

6. Dispositif selon la revendication 2, **caractérisé en ce que** la bague de fixation (6) présente des épaulements (12) qui se trouvent en butée dans des évidements radiaux du disque (3) sans pour autant contrarier la fonction de limitation de déplacement axial de la surface (G) du disque sur la surface (A) de l'arbre (1).

7. Dispositif selon la revendication 2, **caractérisé en ce que** la bague de fixation (6) comporte des passages (7) pour un fluide sous pression.

8. Dispositif selon la revendication 1, **caractérisé en ce que** les arbres d'entraînement et les arbres entraînés sont aplatis dans la zone des chemins de roulement, et en ce que les disques mobiles ont un contour spécial dans la zone des chemins de roulement.
